# EUROPÄISCHE PATENTSCHRIFT

(11) **EP 0 942 858 B1**
(45) Veröffentlichungstag und Bekanntmachung des Hinweises auf die Patenterteilung: **10.09.2003**
(21) Anmeldenummer: 98955380.5
(22) Anmeldetag: 08.10.1998
(51) Int. Cl.: B60S 1/38

(54) **WISCHERGUMMI**
WIPER BLADE RUBBER ELEMENT
ELEMENT EN CAOUTCHOUC DU BALAI D'ESSUIE-GLACE

(30) Priorität: 11.10.1997 DE 19745003
(43) Veröffentlichungstag der Anmeldung: 22.09.1999
(73) Patentinhaber: ROBERT BOSCH GMBH, 70442 Stuttgart (DE)
(72) Erfinder: VAN DAMME, Marc, B-3300 Tienen (BE); VERELST, Hubert, B-3300 Tienen (BE)
(86) Internationale Anmeldenummer: DE9802972
(87) Internationale Veröffentlichungsnummer: WO99019185

(56) Entgegenhaltungen:
- EP-A- 0 727 337
- GB-A- 2 227 649
- US-A- 5 572 764
- PATENT ABSTRACTS OF JAPAN vol. 017, no. 212 (M-1402), 26. April 1993 & JP 04 353058 A (ASMO CO LTD), 8. Dezember 1992

## Beschreibung

Die Erfindung betrifft ein Wischergummi, insbesondere für eine Scheibenwischanlage an Kraftfahrzeugen, mit den im Oberbegriff des Anspruchs 1 genannten Merkmalen.

### Stand der Technik

Wischergummis der gattungsgemäßen Art sind bekannt. Diese bestehen aus einem elastischen Material und sind mittels eines Wischerarmes über eine Kraftfahrzeugscheibe bewegbar. Die Wischergummis bestehen aus einem Kopf, an dem ein mit dem Wischerarm gelenkig verbundener Bügel angreift, der zur Führung des Wischergummis dient. Der Wischergummi weist ferner eine Lippe auf, die in Anlagekontakt mit der zu wischenden Scheibe steht. Die Lippe und der Kopf des Wischergummis sind hierbei derart gelenkig miteinander verbunden, dass bei einer Wischbewegung infolge der Reibungskräfte zwischen dem Wischergummi und der Scheibe ein Umknicken der Lippe in die der Wischbewegung entgegengesetzten Richtung erfolgt. Hierdurch wird ein gleichmäßiges, möglichst schlierenfreies Wischbild sichergestellt.

Bei den bekannten Wischergummis ist nachteilig, dass insbesondere unter extremen Klimabedingungen der zwischen dem Kopf und der Lippe des Wischergummis ausgebildete sogenannte Umlegesteg eine sogenannte Wärmealterung erfährt, die zu einer bleibenden Verformung führt. Hierdurch wird das wechselnde Umlegen der Lippe, entsprechend der jeweiligen Wischbewegung, erschwert, wenn nicht gar verhindert. Hierdurch ist neben einer Geräuschentwicklung nur ein schlechtes Wischbild zu erzielen.

Aus der GB 2 227 649 A ist bereits ein Wischergummi mit den im Oberbegriff des Anspruchs 1 genannten Merkmalen bekannt, bei dem entweder mit Druck beaufschlagbare Kammern in das Wischerblatt integriert oder zwischen Wischerkopf und Wischerlippe Induktionsspulen angeordnet sind, um durch abwechselnde Beaufschlagung der Kammern mit Druck bzw. von an der Wischerlippe angeordneten metallischen Elementen mit einem Magnetfeld -ein zur Wischrichtung entgegengesetzte Umlenken der Lippe auszulösen. Bei dem bekannten Wischergummi wird als nachteilig angesehen, dass er einen komplizierten Aufbau aufweist und in Anbetracht der exponierten Lage des Wischergummis am Kraftfahrzeug extrem störanfällig ist.

### Vorteile der Erfindung

Der erfindungsgemäße Wischergummi mit den im Anspruch 1 genannten Merkmalen bietet demgegenüber den Vorteil, dass dieser auch unter extremen klimatischen Bedingungen, insbesondere auch unter einer starken Wärmeeinwirkung, ein gutes Wischbild gewährleistet. Dadurch, dass die Lippe des Wischergummis mit dem Kopf des Wischergummis über ein elastisches Zwischenteil mit piezo-elektrischen Eigenschaften verbunden ist, das durch Anlegen einer, seine Polarität entsprechend der Wischbewegung ändernde Spannung in Abhängigkeit von einer Wischrichtung des Wischergummis mit einer nur auf das Zwischenteil wirkenden Kraft beaufschlagbar ist, so dass ein der Wischrichtung angepasstes Umlenken der Lippe erfolgt, ist vorteilhaft möglich, ein optimales Umlegen der Lippe unter allen Klima- und Fahrzeugbedingungen zu unterstützen. Durch die piezoelektrischen Eigenschaften des Zwischenteils lässt sich in einfacher Weise die zusätzliche, neben der aufgrund der Reibung an der zu wischenden Scheibe auftretenden Kraft ohne die Geometrie beziehungsweise den grundsätzlichen Aufbau des Wischergummis verändernde Elemente erzielen. Über ein mit dem Wischerantrieb gekoppeltes Steuergerät läßt sich in einfacher Weise ein punkt- beziehungsweise zeitgenaues Umschalten der Polarität der an dem Zwischenteil anliegenden Spannung steuern, so daß mit Änderung der Wischbewegung ein Umklappen der Lippe im wesentlichen automatisch erfolgt. Hierdurch wird eine sichere und optimale Anlage der Lippe an der zu wischenden Scheibe sichergestellt, die zu einem optimalen, insbesondere schlierenfreien und geräuscharmen, Wischbild führt.

Weitere vorteilhafte Ausgestaltungen der Erfindung ergeben sich aus den übrigen, in den Unteransprüchen genannten Merkmalen.

### Zeichnungen

Die Erfindung wird nachfolgend in Ausführungsbeispielen anhand der zugehörigen Zeichnungen näher erläutert. Es zeigen:
- Figur 1: eine Schnittdarstellung durch ein Wischergummi in einem ersten Ausführungsbeispiel;
- Figur 2: eine Detailvergrößerung gemäß Figur 1;
- Figuren 3 und 4: verschiedene, spannungsabhängige Stel-lungen des Wischergummis und
- Figur 5: eine Schnittdarstellung des Wischergummis in einem zweiten Ausführungsbeispiel.

### Beschreibung der Ausführungsbeispiele

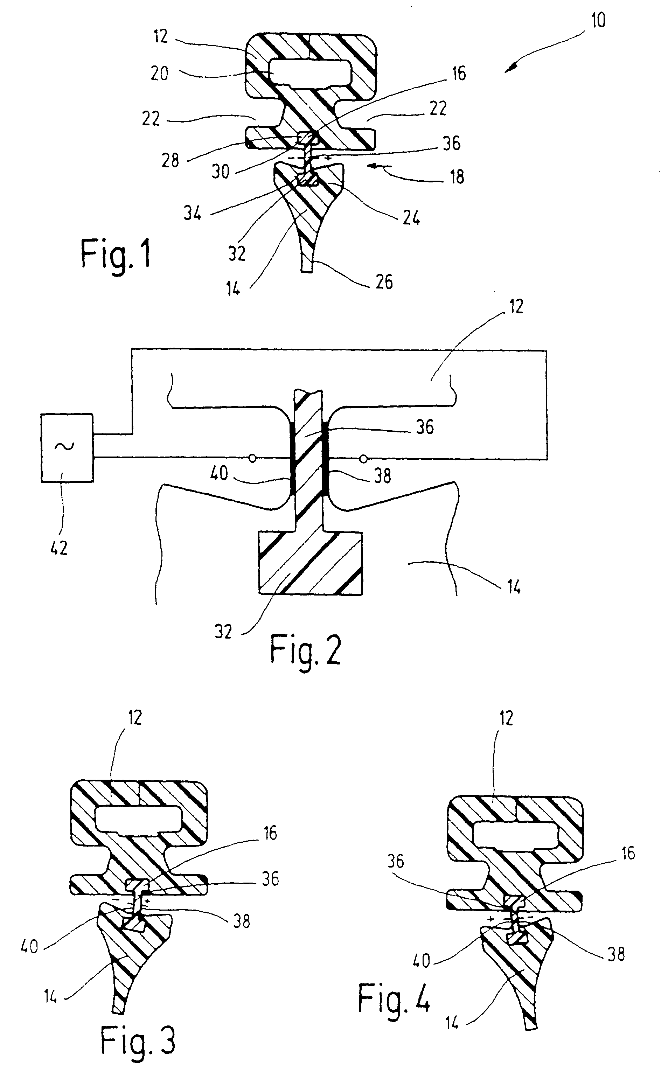

Figur 1 zeigt eine Schnittdarstellung eines Wischergummis 10. Der Wischergummi 10 besteht aus einem Kopf 12, einer Lippe 14 sowie einem, den Kopf 12 mit der Lippe kraftschlüssig verbindenden Zwischenteil 16, das in noch zu erläuternder Weise einen Umlegesteg 18 bildet. Der Kopf 12 bildet einen Hohlraum 20 aus, in dem eine nicht dargestellte Federschiene einbringbar ist. Ferner besitzt der Kopf 12 in Längsrichtung des Wischergummis 10 verlaufende Nuten 22, die der Befestigung des Wischergummis 10 an einem nicht dargestellten Bügel dient, der seinerseits mit einem ebenfalls nicht dargestellten Wischerarm verbindbar ist.

Die Lippe 14 läuft ausgehend von einer Verdickung 24 in einer Anlagefläche 26 aus, die in Berührungskontakt mit einer nicht dargestellten, zu wischenden Scheibe eines Kraftfahrzeuges steht. Der Kopf 12 und die Lippe 24 sind aus einem elastischen Material, beispielsweise Kautschukgummi.

Das Zwischenteil 16 besitzt im Querschnitt gesehen die Form eines Doppel-T, wobei ein erster Schenkel 28 formschlüssig in einer korrespondierenden Ausnehmung 30 des Kopfes 12 und ein zweiter Schenkel 32 formschlüssig in einer korrespondierenden Ausnehmung 34 der Lippe 14 angeordnet ist. Ein die Schenkel 28 und 32 verbindender Steg 36 bildet eine scharnierartige Verbindung zwischen dem Kopf 12 und der Lippe 14. Das Zwischenteil 16 besteht aus einem elastischen Material, das piezo-elektrische Eigenschaften aufweist. Beispielsweise besteht das Zwischenteil 16 aus Polyvinylideenfluoride PVDF, das Copolymere aufweist, die piezo-elektrische Eigenschaften aufweisen.

Der Steg 36 ist, wie die vergrößerte Detailansicht in Figur 2 verdeutlicht, an seinen Längsseiten jeweils mit einer Elektrode 38 beziehungsweise 40 versehen. Die Elektroden 38 und 40 können beispielsweise durch aufgedruckte Leiterbahnen gebildet sein. Die Elektroden 38 und 40 sind mit einer Spannungsquelle 42 verbunden. Die Spannungsquelle 42 ist eine Wechselspannungsquelle, deren Frequenz über ein nicht dargestelltes Steuergerät beeinflußbar ist. Das Steuergerät ist vorzugsweise mit einem ebenfalls nicht dargestellten Wischerantrieb einer den Wischergummi 10 aufweisenden Wischeinrichtung gekoppelt.

Der in den Figuren 1 und 2 gezeigte Wischergummi 10 zeigt die anhand der Figuren 3 und 4 verdeutlichte Funktion:

Durch Anlegen einer Spannung an die Elektroden 38 und 40 mit bestimmter Polarität wird auf das Zwischenteil 16, insbesondere auf dessen Steg 36 infolge der piezo-elektrischen Eigenschaften des Zwischenteiles 16, eine Kraft ausgeübt. Diese Kraft führt zu einer Verformung des Steges 18. Entsprechend der Höhe und der Polarität der über die Spannungsquelle 42 angelegten Spannung erfolgt eine mehr oder weniger starke Verformung entweder in die linke Richtung (Figur 3) oder in die rechte Richtung (Figur 4). Im gezeigten Ausführungsbeispiel ist an die Elektrode 38, wie Figur 3 verdeutlicht, ein positives Potential und an die Elektrode 40 ein negatives Potential der Spannungsquelle 42 gelegt. Entsprechend der in Figur 4 gezeigten Darstellung ist an die Elektrode 40 das positive Potential und an die Elektrode 38 das negative Potential der Spannungsquelle 42 gelegt. Je nach Potentialwechsel erfolgt entsprechend der piezo-elektrischen Eigenschaften des Zwischenteiles 16 ein Umlegen der Lippe 14 nach der einen beziehungsweise anderen Seite.

Beim bestimmungsgemäßen Einsatz des Wischergummis 10 liegt die Lippe 14 mit ihrer Anlagefläche 26 an einer zu wischenden Scheibe an. Entsprechend der Wischrichtung erfolgt infolge an die Lippe 14 angreifender Reibungskräfte ein Umknicken der Lippe 14 entgegen der Wischrichtung. Als Umlenkachse dient hierbei der Steg 36 des Zwischenteiles 16. Dieses Umlenken beziehungsweise Auslenken der Lippe 14 wird durch Anlegen einer entsprechend gepolten Spannung an die Elektroden 38 und 40 unterstützt. Die Polarität der anliegenden Spannung ist hierbei so gewählt, daß auf den Steg 36 des Zwischenteiles 16 eine, diese Bewegung unterstützende, zusätzliche Kraft wirkt. Hierdurch wird sichergestellt, daß unter allen auftretenden klimatischen und/oder Fahrzeugbedingungen ein optimales Umklappen der Lippe 14 zum Erzielen eines optimalen Wischbildes sichergestellt ist.

Die Polarität der Spannungsquelle 42 wechselt entsprechend der Wischrichtung und somit der Wischfrequenz des Wischergummis 10. Hierzu kann beispielsweise die Wischbewegung über einen Wischerantrieb abgegriffen werden, wobei entsprechend der sich hieraus ergebenden Wischrichtung die Polarität der Spannungsquelle 42 wechselt, so daß die Lippe 14 - wie erläutert - entweder nach links oder rechts auslenkt. Bei Nichtgebrauch der Wischanlage kann die Spannungsquelle 42 spannungslos geschaltet sein, so daß eine Krafteinwirkung infolge der piezo-elektrischen Eigenschaften des Zwischenteiles 16 unterbleibt, und dieses somit in seiner, in Figur 1 gezeigten, Ausgangsposition verbleibt.

Die Erfindung beschränkt sich selbstverständlich nicht auf das dargestellte und erläuterte Ausführungsbeispiel. So sind neben anderen Formgebungen, sowohl des Kopfes 12, der Lippe 14 und des Zwischenteiles 16 auch andere Materialien einsetzbar, die durch Anlegen einer elektrischen Spannung eine Verformung erfahren.

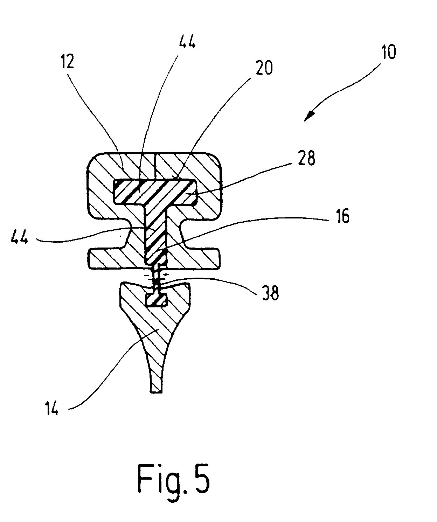

In Figur 5 ist ein weiteres Ausführungsbeispiel eines Wischergummis 10 gezeigt, bei dem gleiche Teile wie in Figur 1 trotz eines teilweise abweichenden Aufbaus mit gleichen Bezugszeichen versehen sind. Hier ist das Zwischenteil 16 gleichzeitig als Federschiene 44 ausgebildet. Der Schenkel 28 ist hierzu in dem Hohlraum 20 des Kopfes 12 angeordnet und über einen Halteabschnitt 46 mit dem Steg 36 verbunden. Hinsichtlich der Funktion des Zwischenteiles 16, insbesondere dessen Steges 36, wird auf die Beschreibung des vorhergehenden Ausführungsbeispieles verwiesen. Zusätzlich zu der Unterstützungsfunktion des Umlenkens der Lippe 14 wird hier durch das Zwischenteil 16 gleichzeitig die Funktion der Federschiene 44 übernommen, die ein gleichmäßiges Anliegen der Lippe 14 über deren Länge, beispielsweise auch an gekrümmten Scheiben von Kraftfahrzeugen, gewährleistet.

## Patentansprüche

1. Wischergummi, insbesondere für eine Scheibenwischanlage an Kraftfahrzeugen, der an einem Wischerarm festlegbar ist, mit einem Kopf zum Halten des Wischergummis und einer Lippe, die in Anlagekontakt mit einer zu wischenden Unterlage steht, wobei die Lippe (14) mit dem Kopf (12) über ein elastisches Zwischenteil (16) verbunden ist, das in Abhängigkeit einer Wischrichtung des Wischergummis (10) mit einer nur auf das Zwischenteil (16) wirkenden Kraft beaufschlagbar ist, so dass ein der Wischrichtung entgegengesetztes Umlenken der Lippe (14) erfolgt, **dadurch gekennzeichnet, dass** das Zwischenteil (16) zumindest teilweise aus einem Material mit piezoelektrischen Eigenschaften besteht, und die zusätzliche Kraft durch Anlegen einer Spannung an das Zwischenteil (16) erfolgt.

2. Wischergummi nach Anspruch 1, **dadurch gekennzeichnet, dass** ein Steg (36) des Zwischenteiles (16) an seiner Längsseite jeweils eine Elektrode (38, 40) aufweist, die mit einer Spannungsquelle (42) verbunden sind.

3. Wischergummi nach einem der vorhergehenden Ansprüche, **dadurch gekennzeichnet, dass** die Spannungsquelle (42) eine Wechselspannungsquelle ist, deren Polarität entsprechend einer Wischrichtung des Wischergummis (10) umschaltbar ist.

4. Wischergummi nach einem der vorhergehenden Ansprüche, **dadurch gekennzeichnet, dass** eine Frequenz der Wechselspannungsquelle (42) einer Wischfrequenz des Wischergummis (10) entspricht.

5. Wischergummi nach einem der vorhergehenden Ansprüche, **dadurch gekennzeichnet, dass** ein Grad der Umlenkung des Steges (36) über eine Höhe der Spannung der Wechselspannungsquelle (42) einstellbar ist.

6. Wischergummi nach einem der vorhergehenden Ansprüche, **dadurch gekennzeichnet, dass** das Zwischenteil (16) aus Polyvinylideenfluoriden (PVDF) mit eingelagerten, piezo-elektrischen Eigenschaften aufweisenden Copolymeren besteht.

7. Wischergummi nach einem der vorhergehenden Ansprüche, **dadurch gekennzeichnet, dass** das Zwischenteil (16) gleichzeitig eine Federschiene (44) des Wischergummis (10) ausbildet.

## Claims

1. Wiper blade rubber element, in particular for a window wiping system on motor vehicles, which can be fixed to a wiper arm, having a head for holding the wiper blade rubber element and a lip which is in abutment contact with an underlying surface to be wiped, the lip (14) being connected to the head (12) by means of an elastic intermediate part (16) to which a force which acts only on the intermediate part (16) can be applied as a function of a wiping direction of the wiper blade rubber element (10), with the effect that the lip (14) is diverted in the direction opposite to the wiping direction, **characterized in that** the intermediate part (16) is composed at least partially of a material with piezoelectric properties and the additional force is effected by applying a voltage to the intermediate part (16).

2. Wiper blade rubber element according to Claim 1, **characterized in that** a web (36) of the intermediate part (16) has on its longitudinal side in each case an electrode (38, 40) which is connected to a voltage source (42).

3. Wiper blade rubber element according to one of the preceding claims, **characterized in that** the voltage source (42) is an alternating voltage source whose polarity can be switched over in accordance with a wiping direction of the wiper blade rubber element (10).

4. Wiper blade rubber element according to one of the preceding claims, **characterized in that** a frequency of the alternating voltage source (42) corresponds to a wiping frequency of the wiper blade rubber element (10).

5. Wiper blade rubber element according to one of the preceding claims, **characterized in that** a degree of the deflection of the web (36) can be set by means of the level of the voltage of the alternating voltage source (42).

6. Wiper blade rubber element according to one of the preceding claims, **characterized in that** the intermediate part (16) is polyvinylidenefluoride (PVDF) with incorporated copolymers having piezoelectric properties.

7. Wiper blade rubber element according to one of the preceding claims, **characterized in that** the intermediate part (16) simultaneously forms a spring rail (44) of the wiper blade rubber element (10).

## Revendications

1. Raclette d'essuie-glace, notamment pour une installation d'essuie-glace de véhicule automobile, qui se fixe à un bras d'essuie-glace et comporte une tète pour fixer la raclette et une lèvre venant en contact d'appui avec le support à essuyer, la lèvre (14) étant reliée à la tête (12) par une pièce intermédiaire (16) élastique et, qui, suivant le sens d'essuyage de la raclette (10) subit une force agissant seulement sur la pièce intermédiaire (16) pour produire un basculement de la lèvre (14) dans la direction opposée à la direction d'essuyage,
**caractérisée en ce que**
la pièce intermédiaire (16) est réalisée au moins en partie en une matière ayant des caractéristiques piézo-électriques et la force supplémentaire est assurée par l'application d'une tension à la pièce intermédiaire (16).

2. Raclette d'essuie-glace selon la revendication 1,
**caractérisée en ce qu'**
une entretoise (36) de la pièce intermédiaire (16) comporte sur ses grands côtés chaque fois une électrode (38), (40), reliées à une source de tension (42).

3. Raclette d'essuie-glace selon l'une des revendications précédentes,
**caractérisée en ce que**
la source de tension (42) est une source de tension alternative dont la polarité est commutée suivant le sens d'essuyage de la raclette (10).

4. Raclette d'essuie-glace selon l'une des revendications précédentes,
**caractérisée en ce que**
la fréquence de la source de tension alternative (42) correspond à une fréquence d'essuyage de la raclette (10).

5. Raclette d'essuie-glace selon l'une des revendications précédentes,
**caractérisée en ce que**
le degré de basculement de l'entretoise (36) se règle par l'amplitude de la tension fournie par la petite source de tension alternative (42).

6. Raclette d'essuie-glace selon l'une des revendications précédentes,
**caractérisée en ce que**
la pièce intermédiaire (16) est en fluorure de polyvinilidène PVDF intégrant des copolymères ayant des propriétés piézo-électriques.

7. Raclette d'essuie-glace selon l'une des revendications précédentes,
**caractérisée en ce que**
la pièce intermédiaire (16) est en même temps réalisée comme rail élastique (44) pour la raclette (10).
